# EUROPEAN PATENT APPLICATION

(11) **EP 1 847 822 A1**
(43) Date of publication of application: **24.10.2007**
(21) Application number: 07251638.8
(22) Date of filing: 18.04.2007
(51) Int. Cl.: G01J 5/04, G08B 13/19

(54) **A passive infrared detector with internal masking means**

(30) Priority: 20.04.2006 MY 0601810
(71) Applicant: IQ Group SDN BHD, Fasa 1(FTZ) Bayan Lepas, 11900 Penang (MY)
(72) Inventor: Chen, Wen Chin, 11900 Pulau Pinang (MY); Lai, Kong Yeow, 11900 Bayan Lepas Pulau Pinang (MY)
(74) Representative: Gambell, Derek

(57) **Abstract**

A passive infrared detector (100) comprises an arc lens assembly (20), a control module (30) equipped with at least one pyro sensor (31) and electrical circuitry, and a module cover (40). There is disclosed an internal masking means (33) made in accordance to the present invention to cover each pyro sensor (31). The masking means (33) is made of opaque material and assumes substantially a L-shape. Its long arm is intermediately disposed in between the arc lens assembly (20) and the pyro sensor (31). The free end of its short arm carries a serrated turning knob (32) which is affixed to and protrudes through the module cover (40) above the pyro sensor (31). An external turning force from a screwdriver is applied to the turning knob (32) to turn the masking means (33). The long arm of the masking means (33) at various positions either free or obstructs partially or completely infrared rays following the optical paths from the arc lens assembly (20) to the pyro sensor (31).

## Description

### TECHNICAL FIELD

The present invention relates generally to detection range control of a passive infrared detector, and specifically to a passive infrared detector with internal masking means.

### BACKGROUND OF THE INVENTION

A prior art passive infrared detector essentially comprises an arc lens assembly, a control module with electrical circuitry, and a module cover. At least one pyro sensor will be affixed to the control module to extend the field of view. Perpendicular to the surface plane of a pyro sensor, there is an imaginary centerline from the pyro sensor, which is called here below as a focusing axis.

An arc lens is made up of high-density polyethylene (HDPE) polymeric material. Optical focal points are designed onto the lenses in Fresnel or dotted configuration. Commercially, this arc lens assembly will constitute layers of these lenses. Those layers towards the top receive rays from the far range. Those layers towards the bottom receive rays from the near range. Each pyro sensor is limited by its technical specification to receive infrared rays vertically and horizontally. These ranges, coupled with the array of the optical lens assembly, define the angle of detection and the range or distance of detection of the detector.

The prior art lens assembly can either be cylindrically shaped or semi-spherically shaped. The pyro sensor together with its carrier module is commonly fixed and stationary. This means the detection view of the detector is likewise fixed and stationary. In order to change the detection view, the carrier module together with the pyro sensor has to be moved entirely. This constitutes a constructional difficulty and is undesirable.

Where the detection view of the detector needs to be curtailed partially or completely, a masking means made of opaque material is externally applied to the outside surface of the arc lens assembly. The external masking means is unsightly in the first place. On the other hand, the external masking means when not applied cannot be stored and retrieved easily.

### SUMMARY OF THE INVENTION

The present invention has therefore as an object to improve passive infrared detector so that its detection view can be blocked and adjusted.

The object is achieved by disposing a masking means, made of opaque material, intermediately in between the arc lens assembly and the pyro sensor. The masking means assumes a substantially L-shape, with one end carrying a serrated turning knob which is affixed to and protrudes through the module cover above the pyro sensor. An external force from a screwdriver is applied to the serrated turning knob to turn the masking means.

### BRIEF DESCRIPTION OF THE DRAWINGS

In order that the present invention may be more readily understood, the following description is given, by way of example, of a semi-spherically shaped detector. Reference will be made to the accompanying drawings, in which:
Figure 1 shows one semi-spherically shaped detector installed to the bottom side of one end of a horizontal support arm.
Figure 2a is a detached view of the semi-spherical detector as in Figure 1, showing a masking means of the invention at an unblocked position, being turned by a turning knob with the assistance of a screwdriver.
Figure 2b is a partial cross-section view of the masking means as shown in Figure 2a in relation to a pyro sensor.
Figure 3a is an inside view of a control module as in Figure 2a, showing the masking means of the invention disposed at an upperly blocked position, being turned with the assistance of a screwdriver.
Figure 3b is a partial cross-section view of the masking means as shown in Figure 3a in relation to a pyro sensor.
Figure 4a is an inside view of a control module as in Figure 2a, showing the masking means of the invention disposed at a fully blocked position, being turned with the assistance of a screwdriver.
Figure 4b is a partial cross-section view of the masking means as shown in Figure 4a in relation to a pyro sensor.
Figure 5a is an inside view of a control module as in Figure 2a, showing the masking means of the invention disposed at a bottomly blocked position, being turned with the assistance of a screwdriver.
Figure 5b is a partial cross-section view of the masking means as shown in Figure 5a in relation to a pyro sensor.

### DETAILED DESCRIPTION

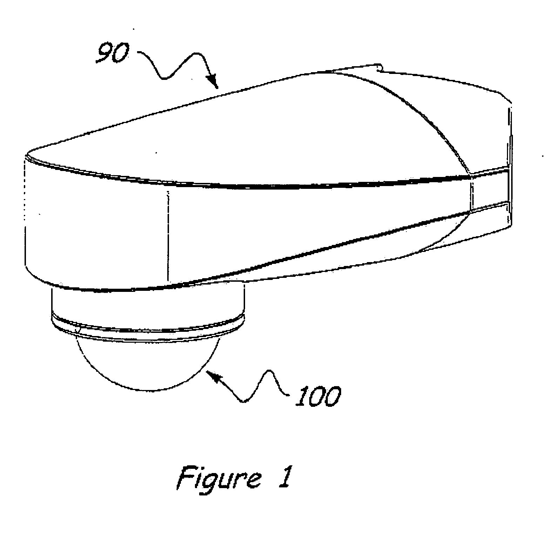

Figure 1 shows one semi-spherically shaped detector (100) installed to the bottom side of one end of a horizontal support arm (90). This type of detector (100) is usually wall-mounted at a certain height from the ground. It is to be noted that a detector can be ceiling-mounted as well. While a semi-spherically shaped arc lens assembly (20) is disclosed here below, the arc lens assembly can also assume a cylindrical configuration.

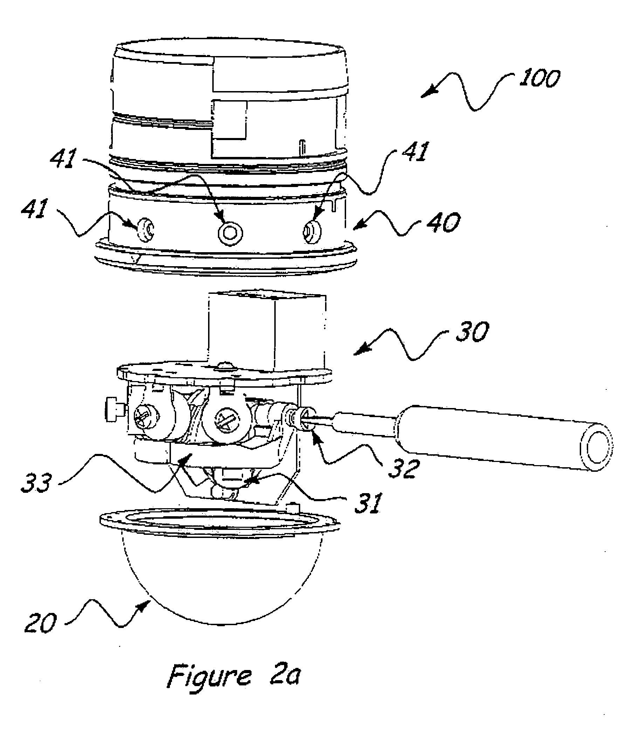

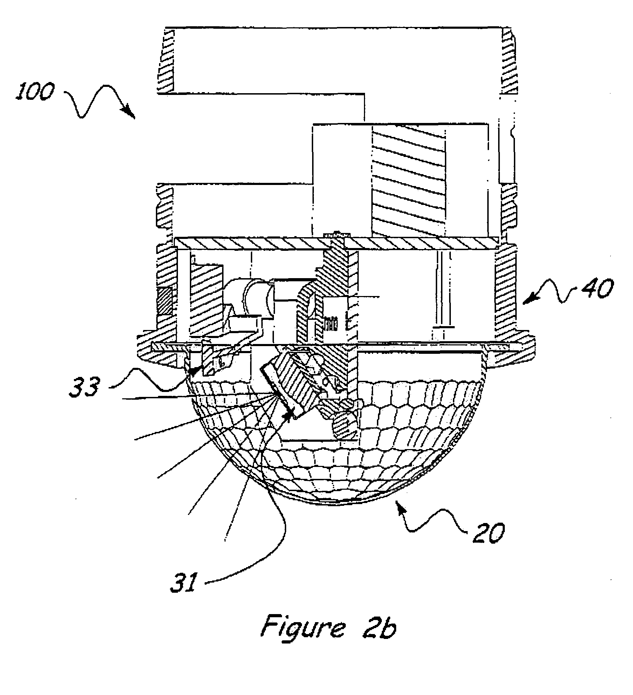

A passive infrared detector (100) comprises an arc lens assembly (20), a control module (30) and a module cover (40). As seen in Figures 2a and 2b, the semi-spherical lens assembly (20) and the control module (30) are detached from the module cover (40). The module cover (40) has an inverted open cylindrical shape. In this detector (100), three locations (41) for turning knobs (32) are provided at the wall section near the open end of the module cover (40). At least one pyro sensor (31) is more or less permanently affixed onto the control module (30). Electrical circuitry is known to those skilled in the art and will not be discussed.

A masking means (33) is made of opaque material. The masking means (33) assumes substantially a L-shape. A serrated turning knob (32) is provided at the free end of the short arm of the L-shaped masking means (33). The serrated turning knob (32) is affixed to and protrudes through the module cover (40) above the pyro sensor (31). The long arm of the L-shaped masking means (33) is intermediately disposed in between the arc lens assembly (20) and the pyro sensor (31). The long arm effectively serves to shield infrared rays from reaching the pyro sensor (31) partially or completely. This long arm can be turned to various positions. An external turning force from a screwdriver is applied to the serrated turning knob (32) to turn the masking means (33).

At least one serrated turning knob (32) will protrude through the module cover (40), so that it is accessible to the outside. The masking means (33) is clearly shown to be associated with the turning knob (32). An object's emitted infrared rays pass through different layers on the arc lens assembly (20) and converge towards the centre of the pyro sensor (31). The masking means (33) is lifted away from the focusing axis of the pyro sensor (31). This represents an unblocked position of the invention.

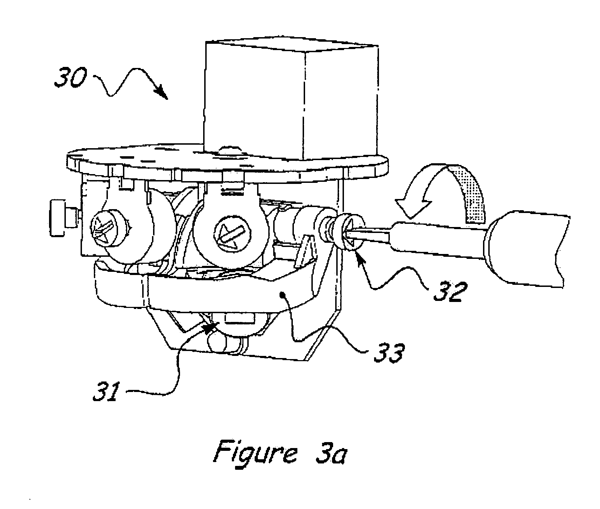

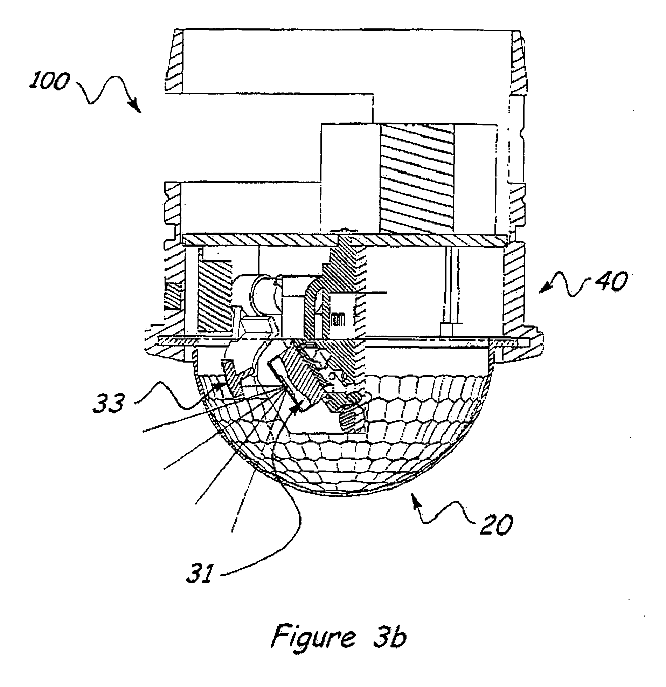

As seen in Figures 3a and 3b, the masking means (33) has been turned by the turning knob (32), so that the masking means (33) is slightly lowered. At this position, the masking means (33) interrupts infrared rays following the upper optical path of the arc lens assembly (20) to the pyro sensor (31), while allowing rays from other optical paths to reach the pyro sensor (31). At this position, the detector (100) is said to be receiving infrared rays from the near range.

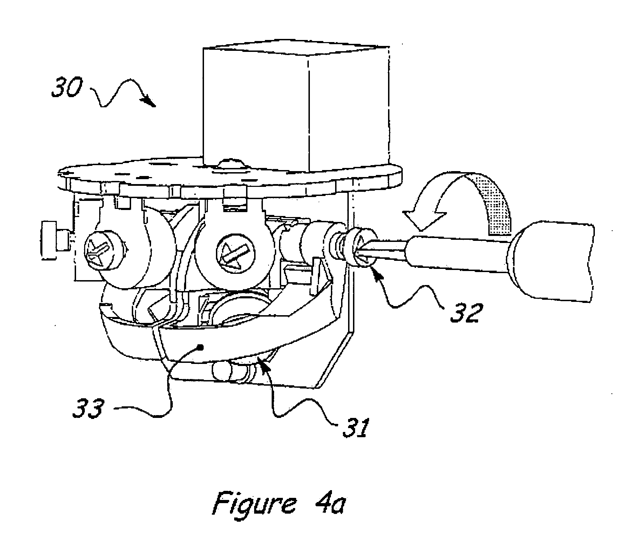

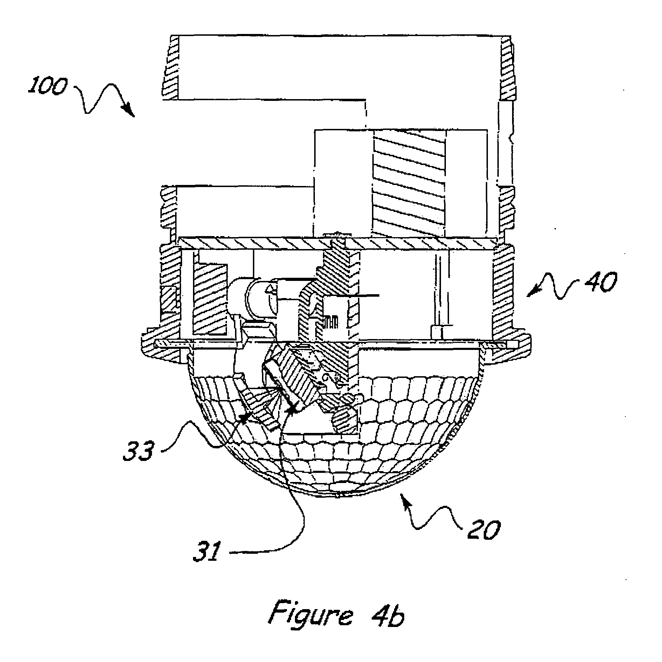

As seen in Figures 4a and 4b, the masking means (33) is further lowered, so that the masking means (33) is blocking rays from all optical paths. No ray is allowed to reach the pyro sensor (31). This represents a fully blocked position of the invention.

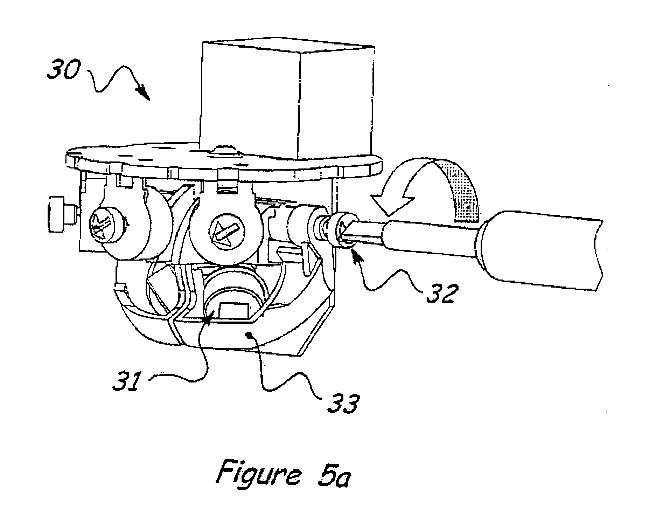

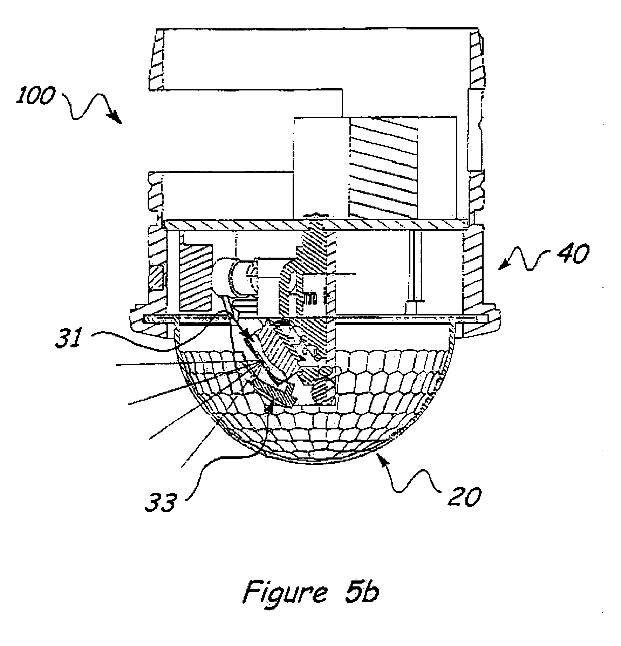

As seen in Figures 5a and 5b, the masking means (33) is further lowered. The masking means (33) is interrupting infrared rays from the bottom optical paths, while allowing rays from other paths to pass. Infrared rays from the far range continue to be received by the pyro sensor (31).

It is obvious to those skilled in the art that the above masking means (33) can also be applied to a cylindrically shaped detector (100). In the above description, reference is made to a pyro sensor (31) as if it is stationary and permanently disposed. However, there will be proprietory actuation mechanisms that would adjust the position of or rotate the pyro sensor (31). With the pyro sensor (31) in a new position or orientation, the above masking means (33) can then be invoked.

## Claims

1. A passive infrared detector (100), comprising an arc lens assembly (20), a control module (30) equipped with at least one pyro sensor (31) and electrical circuitry, and a module cover (40), is **characterised in** which
a masking means (33) is made of opaque material and assumes substantially a L-shape; its long arm is intermediately disposed in between the arc lens assembly (20) and each pyro sensor (31); the free end of its short arm carries a serrated turning knob (32) which is affixed to and protrudes through the module cover (40) above the pyro sensor (31),
whereby an external turning force is applied to the serrated turning knob (32) to turn the long arm of the masking means (33).

2. A passive infrared detector (100) with an internal masking means (33) as in Claim 1 in which the long arm of the masking means (33) can be turned to a position that is not blocking all infrared rays following any optical path from the arc lens assembly (20) to the pyro sensor (31).

3. A passive infrared detector (100) with an internal masking means (33) as in Claim 1 in which the long arm of the masking means (33) can be turned to a position that is blocking infrared rays following the optical paths from the arc lens assembly (20) to the pyro sensor (31).

4. A passive infrared detector (100) with an internal masking means (33) as in Claim 3 in which the long arm of the masking means (33) can be turned to a position that is blocking completely all infrared rays following the optical paths from the arc lens assembly (20) to the pyro sensor (31).

5. A passive infrared detector (100) with an internal masking means (33) as in Claim 3 in which the long arm of the masking means (33) can be selectively turned to an upper portion of the pyro sensor (31), blocking infrared rays following the optical paths from the upper portions of the arc lens assembly (20) representing the far range view of the detector (100).

6. A passive infrared detector (100) with an internal masking means (33) as in Claim 3 in which the long arm of the masking means (33) can be selectively turned to cover the bottom portion of the pyro sensor (31), blocking infrared rays following the optical paths from the bottom portions of the arc lens assembly (20) representing the near range view of the detector (100).
